# EUROPEAN PATENT APPLICATION

(11) **EP 4 513 067 A1**
(43) Date of publication of application: **26.02.2025**
(21) Application number: 23791107.8
(22) Date of filing: 13.04.2023
(51) Int. Cl.: F16K 31/06, F16K 27/00, F16K 49/00

(54) **SOLENOID VALVE AND COIL THEREOF, AND HOUSING OF COIL**

(30) Priority: 18.04.2022 CN 202220897073 U
(71) Applicant: Zhejiang Dunan Artificial Environment Co., Ltd., Shaoxing Zhejiang 311800 (CN)
(72) Inventor: HU, Jianmiao, Shaoxing, Zhejiang 311800 (CN); ZHANG, Kepeng, Shaoxing, Zhejiang 311800 (CN); MA, Yanting, Shaoxing, Zhejiang 311800 (CN); DENG, Kun, Shaoxing, Zhejiang 311800 (CN); ZHENG, Mingchao, Shaoxing, Zhejiang 311800 (CN)
(74) Representative: Studio Torta S.p.A.
(86) International application number: PCT/CN2023/087975
(87) International publication number: WO 2023/202452

(57) **Abstract**

A housing (100) of a solenoid valve coil, the housing comprising a body (1) and a heat dissipation structure (2). The body is provided with a cavity (11), which is used for accommodating a coil portion of the solenoid valve coil, an outer wall surface of the body has an arc-shaped surface (12), and the heat-dissipation structure is integrally arranged on the arc-shaped surface of the housing. The heat dissipation structure (2) is recessed and/or protrudes from the arc-shaped surface (12), and the housing of the solenoid valve coil increases the surface area of the outer wall surface of the housing, improving the heat dissipation performance of the housing during operation of the coil. Further disclosed are a solenoid valve coil comprising the housing, and a solenoid valve.

## Description

### CROSS REFERENCE

The present disclosure claims the priority of the Chinese patent application with application number 202220897073.5, titled "SOLENOID VALVE AND COIL THEREOF, AND HOUSING OF COIL", and filed on April 18, 2022, the entire content of which is incorporated herein by reference.

### TECHNICAL FIELD

The present disclosure relates to the technical field of solenoid valves, and particularly, to a solenoid valve, a coil thereof, and a housing of the coil.

### BACKGROUND

A solenoid valve is a valve device that controls fluid communication or blocking by powering the coil on or off. The solenoid valve is equipped with a coil, an iron core and a piston, and the iron core is controlled to drive the movement of the piston by using the changing magnetic field generated by powering the coil on or off, so as to communicate or block the inlet and outlet, thereby achieving control of the fluid.

When the solenoid valve is working, a certain amount of heat will be generated after the coil is powered on. However, the heat dissipation effect of the solenoid valve coil in the related art is poor, which affects the normal operation of the solenoid valve.

### SUMMARY

Embodiments of the present disclosure provide a solenoid valve, a coil thereof, and a housing of the coil, which can improve the heat dissipation performance of the coil.

The housing of the solenoid valve coil in the embodiment of the present disclosure includes a body and a heat dissipation structure. The body has a cavity, and the cavity is used to accommodate a coil part of the solenoid valve coil; an outer wall surface of the body has an arc-shaped surface; the heat dissipation structure is integrally provided on the arc-shaped surface of the housing; where the heat dissipation structure is concave and/or convex on the arc-shaped surface.

The solenoid valve in the embodiment of the present disclosure includes the solenoid valve coil described in any one of the above.

One embodiment in the above disclosure has at least the following advantages or beneficial effects.

In the housing of the solenoid valve coil in the embodiments of the present disclosure, the arc-shaped surface of the body is integrally provided with a heat dissipation structure, and the heat-dissipation structure is concave or convex on the arc-shaped surface of the body, thereby increasing the surface area of the outer wall surface of the housing, and thus improving the heat dissipation performance of the housing when the coil is working.

### BRIEF DESCRIPTION OF THE DRAWINGS

FIG. 1 shows a schematic three-dimensional view of a housing of a solenoid valve coil according to an embodiment of the present disclosure.
FIG. 2 shows a side view of the housing of the solenoid valve coil according to the embodiment of the present disclosure.
FIG. 3 shows a cross-sectional view along line A-A in FIG. 2.

The reference signs are explained as follows:
100. Housing
1. Body
11. Cavity
12. Arc-shaped surface
13. First opening
2. Heat dissipation structure
21. Groove
211. Groove wall
22. Boundary ridge
t. Depth

### DETAILED DESCRIPTION

Exemplary implementations will now be described more fully with reference to the accompanying drawings. Exemplary implementations may, however, be embodied in many forms and should not be construed as limited to the implementations set forth herein; rather, these implementations are provided so that the present disclosure will be thorough and complete, and will fully convey the concept of the exemplary implementations to those skilled in the art. The same reference signs in the drawings denote the same or similar structures, and thus their detailed descriptions will be omitted.

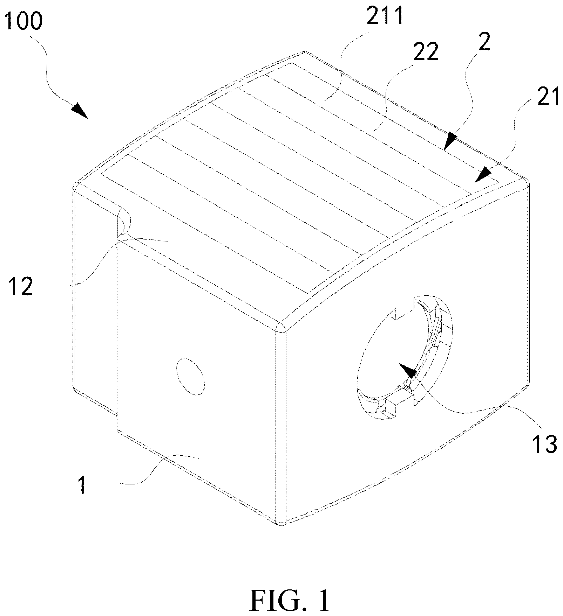

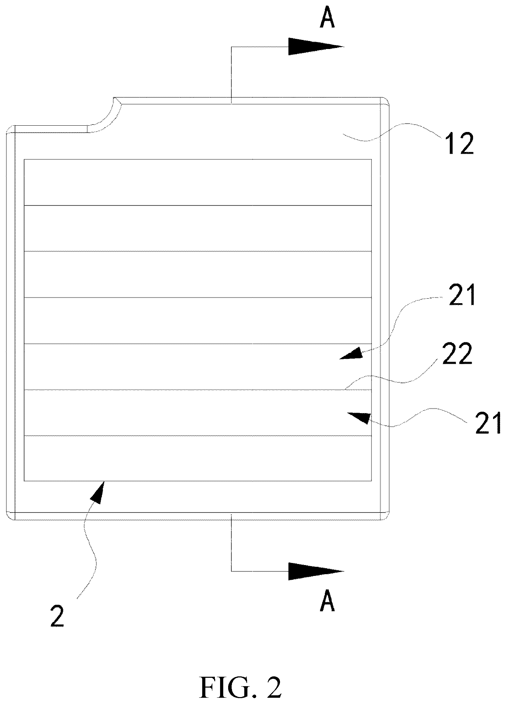

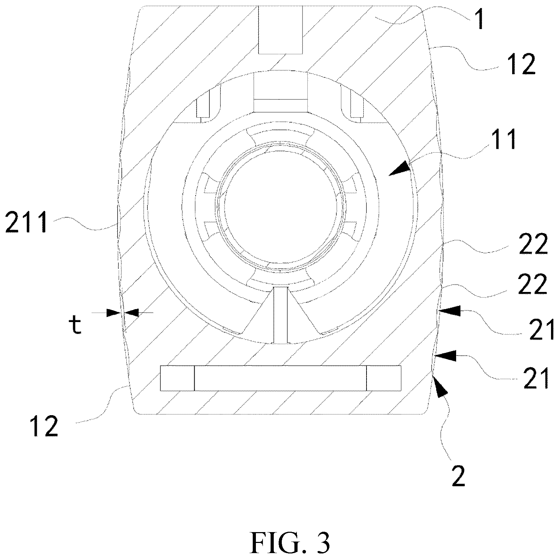

As shown in FIGs. 1 to 3, FIG. 1 shows a schematic three-dimensional view of a housing 100 of a solenoid valve coil according to an embodiment of the present disclosure, FIG. 2 shows a side view of the housing 100 of the solenoid valve coil according to the embodiment of the present disclosure, and FIG. 3 shows a cross-sectional view along line A-A in FIG. 2. The housing 100 of the solenoid valve coil in the embodiment of the present disclosure includes a body 1 and a heat dissipation structure 2. The body 1 has a cavity 11, and the cavity 11 is used to accommodate a coil part (not shown in the figure) of the solenoid valve coil. The outer wall surface of the body 1 has an arc-shaped surface 12. The heat dissipation structure 2 is integrally provided on the arc-shaped surface 12 of the housing 100. The heat dissipation structure 2 is concave and/or convex on the arc-shaped surface 12.

In the housing 100 of the solenoid valve coil in the embodiment of the present disclosure, the arc-shaped surface 12 of the body 1 is integrally provided with a heat dissipation structure 2, and the heat dissipation structure 2 is concave or convex on the arc-shaped surface 12 of the body 1. Therefore, the surface area of the outer wall surface of the housing 100 is increased, thereby improving the heat dissipation performance of the housing 100 when the coil is operating.

It will be understood that the terms "include" and "have" in the embodiments of the present disclosure, as well as any variations thereof, are intended to cover non-exclusive inclusion. For example, a process, method, system, product or device that contains a series of steps or units is not limited to the listed steps or units, but may optionally also include steps or units that are not listed, or may optionally also include other steps or components inherent to these processes, methods, products or devices.

Continuing to refer to FIGs. 1 to 3, in this embodiment, the heat dissipation structure 2 is concave on the arc-shaped surface 12 of the body 1. Through the design of the heat dissipation structure 2 being concave on the arc-shaped surface 12 of the body 1, the arc-shaped surface 12 on the side of the body 1 with the heat dissipation structure 2 does not protrude from the surface of the body 1, that is, the heat dissipation structure 2 does not increase the outer contour of the body 1, and the heat dissipation structure 2 will not affect the installation of other component(s).

It can be understood that in other implementations, the heat dissipation structure 2 may also protrude from the arc-shaped surface 12 of the body 1.

When the heat dissipation structure 2 is concave on the arc-shaped surface 12 of the body 1, the heat dissipation structure 2 may be a groove, a pit, or other structures. When the heat dissipation structure 2 is convex on the arc-shaped surface 12 of the body 1, the heat dissipation structure 2 may be a protrusion, a bump, a boss, or other structures.

It can be understood that whether the heat dissipation structure 2 is concave or convex on the arc-shaped surface 12 of the body 1, it can increase the surface area of the outer wall surface of the housing 100, thereby allowing the heat inside the housing 100 to dissipate outward through the heat dissipation structure 2, so as to improve the overall heat dissipation performance of the housing 100.

In this embodiment, the body 1 has two opposite arc-shaped surfaces 12, and each arc-shaped surface 12 is provided with the heat dissipation structure 2. By disposing the heat dissipation structure 2 on each arc-shaped surface 12, the surface area of the outer wall of the housing 100 is further increased, and the heat dissipation performance is further improved.

It should be noted that the housing 100 of the embodiment of the present disclosure only has two opposite arc-shaped surfaces 12, while the other surfaces of the body 1 are all flat surfaces. This design is because the remaining flat surfaces are for fitting and installation with other component(s), and the heat dissipation structure 2 is not provided on the flat surfaces of the body 1 to avoid affecting the fitting and installation of the housing 100 with other components.

Continuing to refer to FIGs. 1 to 3, the heat dissipation structure 2 includes a plurality of grooves 21 arranged side by side.

In this embodiment, each groove 21 is elongated. The direction in which the plurality of grooves 21 are arranged side by side is along the width direction of the grooves 21.

It can be understood that in some implementations, the shape of the groove 21 may also be circular, rectangular, other polygonal, etc. In addition, the plurality of grooves 21 may also be arranged in an array on the arc-shaped surface 12 of the body 1.

Alternatively, in some implementations, the heat dissipation structure 2 may include a plurality of grooves 21 with different shapes and/or sizes.

Two adjacent grooves 21 are adjoined and form a boundary ridge 22. In other words, the groove walls 211 of two adjacent grooves 21 are directly connected and intersect at the boundary ridge 22. Through the design of adjoining the plurality of grooves 21, the arc-shaped surface 12 can be arranged with as many grooves 21 as possible to maximize the surface area of the outer wall of the housing 100.

The groove wall 211 of each groove 21 may have various shapes, such as a curved surface, a flat surface, or a combination of a flat surface and a curved surface.

In this embodiment, the shape of the groove wall 211 of each groove 21 is circular-arc-shaped. In this way, the plurality of grooves 21 arranged side by side can form a wavy heat dissipation structure 2.

In some implementations, the plurality of grooves 21 arranged side by side may also form a zigzag-shaped heat dissipation structure 2.

The heat dissipation structure 2 and the body 1 are integrally injection molded. The heat dissipation structure 2 and the body 1 are integrally injection molded, which makes the processing of the heat dissipation structure 2 more convenient and avoids difficulty in molding the heat dissipation structure 2 due to the brittle material of the body 1. In addition, when the heat dissipation structure 2 is concave on the arc-shaped surface 12 of the body 1, the integrated injection molding can also save materials and reduce material costs.

A first opening 13 and a second opening (not shown in the figure) are respectively provided on two opposite sides of the body 1. The first opening 13 and the second opening are respectively connected with the cavity 11, and the axis of the first opening 13 coincides with the axis of the second opening. Each groove 21 is elongated, and the extending direction of the groove 21 is parallel to the axis of the first opening 13.

It should be noted that the first opening 13 and the second opening of the body 1 can be used for other component(s) to pass through, such as a conduit with an iron core, etc. In this embodiment, the extending direction of the groove 21 is designed to be parallel to the axis direction of the first opening 13, which makes it easier to demold the housing 100 after injection molding.

The depth t of the groove 21 is 0.2-0.7mm, such as 0.3, 0.4, 0.5, 0.6mm. Further, the depth t of the groove 21 is 0.3-0.7 mm.

It can be understood that the depth t here refers to a distance between the lowest point of the groove wall 211 of the groove 21 and the corresponding arc-shaped surface 12 of the groove 21.

As an example, when the housing 100 is not provided with the heat dissipation structure 2, the surface area of the arc-shaped surface 12 of the housing 100 is 1400 mm². When other dimensions of the arc-shaped surface 12 remain unchanged and the depth t of the groove 21 is in the range of 0.2-0.7mm, the surface area of the arc-shaped surface 12 increases to 1540mm². It can be seen that the surface area of the arc-shaped surface 12 with the heat dissipation structure 2 is increased by about 10% compared with the original surface area. The increase in the surface area can not only improve the heat dissipation performance, but also reduce the material costs.

Another aspect of the present disclosure also provides a solenoid valve coil, including any of the above housings 100 of the solenoid valve coil and a coil part. The coil part is packaged in the cavity 11 of the housing 100. The coil part may include a coil, a coil bobbin, an iron core, etc.

In yet another aspect of the present disclosure, a solenoid valve is provided, including the above-mentioned solenoid valve coil.

Since the housing 100 of the solenoid valve coil of any of the above embodiments is included, the solenoid valve and its coil of the embodiments of the present disclosure have all the advantages and beneficial effects of any of the above embodiments, which will not be described again here.

It can be understood that the various embodiments/implementations provided by the present disclosure can be combined with each other if there is no conflict, and examples will not be given here one by one.

In summary, the advantages and beneficial effects of the solenoid valve, its coil, and the housing 100 of the coil according to the embodiments of the present disclosure at least include:
the arc-shaped surface 12 of the body 1 is integrally provided with a heat dissipation structure 2, the heat dissipation structure 2 is concave or convex on the arc-shaped surface 12 of the body 1, thereby increasing the surface area of the outer wall surface of the housing 100, and improving the heat dissipation performance of the housing 100 when the coil operates.

In the disclosed embodiments, the terms "first", "second", and "third" are used for descriptive purposes only, and should not be construed as indicating or implying relative importance; the term "a plurality of" refers to two or more than two, unless otherwise expressly limited. The terms "install", "connected", "connection", "fixed" and other terms should be interpreted in a broad sense, for example, "connection" may be a fixed connection, a detachable connection, or an integral connection; "connected" may be directly connected or indirectly connected through an intermediary. Those of ordinary skill in the art can understand the specific meanings of the above terms in the disclosed embodiments according to specific situations.

In the description of the disclosed embodiments, it should be understood that the orientations or positional relationships indicated by the terms "upper", "lower", "left", "right", "front", "rear" are based on the orientations or positional relationships shown in the accompanying drawings, which are only for the convenience of describing the disclosed embodiments and simplifying the description, and does not indicate or imply that the referred apparatus or unit must have a specific orientation, or be constructed and operated in a specific orientation, and therefore, they cannot be construed as a limitation to the disclosed embodiments.

In the description of this specification, descriptions of the terms "one embodiment", "some embodiments", "specific embodiment" and the like mean that specific features, structures, materials, or characteristics described in connection with the embodiments or examples are included in at least one embodiment or example of the disclosed embodiments. In this specification, schematic representations of the above terms do not necessarily refer to the same embodiment or example. Furthermore, the specific features, structures, materials or characteristics described may be combined in any suitable manner in any one or more embodiments or examples.

The above are only preferred embodiments of the disclosed embodiments, and are not intended to limit the disclosed embodiments. For those skilled in the art, various modifications and changes may be made to the disclosed embodiments. Any modifications, equivalent replacements, improvements, etc. made within the spirit and principle of the disclosed embodiments shall be included in the protection scope of the disclosed embodiments.

## Claims

1. A housing of a solenoid valve coil, comprising:
a body having a cavity, wherein the cavity is used to accommodate a coil part of the solenoid valve coil; an outer wall surface of the body has an arc-shaped surface; and
a heat dissipation structure integrally provided on the arc-shaped surface of the housing;
wherein the heat dissipation structure is concave and/or convex on the arc-shaped surface.

2. The housing of the solenoid valve coil according to claim 1, wherein the heat dissipation structure comprises a plurality of grooves arranged side by side.

3. The housing of the solenoid valve coil according to claim 2, wherein two adjacent grooves are adjoined and form a boundary ridge.

4. The housing of the solenoid valve coil according to claim 2, wherein a groove wall of each of the grooves is circular-arc-shaped.

5. The housing of the solenoid valve coil according to claim 2, wherein two opposite sides of the body are respectively provided with a first opening and a second opening, the first opening and the second opening are respectively communicated with the cavity, and an axis of the first opening coincides with an axis of the second opening;
an extending direction of each of the grooves is parallel to the axis of the first opening.

6. The housing of the solenoid valve coil according to claim 2, wherein a depth of the groove is 0.2-0.7 mm.

7. The housing of the solenoid valve coil according to claim 6, wherein the depth of the groove is 0.3-0.7 mm.

8. The housing of the solenoid valve coil according to claim 1, wherein the heat dissipation structure and the body are integrally injection molded.

9. A solenoid valve coil, comprising:
the housing of the solenoid valve coil according to any one of claims 1 to 8; and
a coil part packaged in the cavity of the housing.

10. A solenoid valve, comprising the solenoid valve coil according to any one of claims 1 to 9.
